# DEMANDE DE BREVET EUROPEEN

(11) **EP 4 843 744 A1**
(43) Date de publication de la demande: **25.11.2026**
(21) Numéro de dépôt: 26179498.6
(22) Date de dépôt: 19.05.2026
(51) Int. Cl.: B29C 48/00

(54) **PROCEDE DE PREPARATION D'UN EXTRUDAT COMPRENANT AU MOINS UN POLYMERE ET DES RESIDUS ISSUS DE LA TRANSFORMATION DE DECHETS ORGANIQUES VEGETAUX PROVENANT DE FRUITS, DE LEGUMES ET/OU DE CEREALES**

(30) Priorité: 21.05.2025 FR 2505445
(71) Demandeur: Bihur, 64240 Ayherre (FR)
(72) Inventeur: ETCHEVERRY, Pierre, 64600 ANGLET (FR)
(74) Mandataire: Santarelli

(57) **Abrégé**

La présente invention concerne un procédé de préparation d'un extrudât comprenant l'introduction d'au moins un polymère dans un corps de mélange (20) muni d'une bi-vis (21), par une zone d'alimentation principale (30), puis l'incorporation progressive, en aval de ladite zone d'alimentation principale (30), de résidus issus de la transformation de déchets organiques, notamment de fruits, de légumes et/ou de céréales, au moyen d'au moins deux zones d'alimentation auxiliaires (41, 42, 43), afin d'obtenir un mélange homogène dudit polymère et desdits résidus. Le mélange obtenu est chauffé jusqu'à obtention d'un mélange pâteux, puis extrudé au travers d'une filière (50) afin de former un extrudât. L'invention concerne également l'extrudât ainsi obtenu et son utilisation pour la fabrication d'articles par transformation ultérieure.

## Description

### DOMAINE DE L'INVENTION

La présente invention se rapporte à un nouveau procédé de préparation d'un extrudât au moyen d'une extrudeuse, à partir d'au moins un polymère choisi parmi les polymères pétro-sourcés recyclés, biosourcés et/ou d'origine bactérienne, et de résidus issus de la transformation de déchets organiques végétaux. L'invention vise en outre à fournir un extrudât obtenu par ledit procédé, ainsi que son utilisation dans divers procédés de transformation, tels que le moulage par injection, le rotomoulage, le thermoformage, l'extrusion ou le calandrage. L'extrudât selon l'invention est notamment apte à être utilisé dans la fabrication d'objets de toute nature, présentant une bonne tenue mécanique ainsi qu'une résistance adaptée aux contraintes d'usage.

### ARRIERE-PLAN TECHNOLOGIQUE

L'industrie des polymères repose encore largement sur l'utilisation de matières premières d'origine fossile, soulevant d'importants défis en termes d'impact environnemental et de durabilité. Parallèlement, les résidus issus des transformations agroalimentaires demeurent, dans une large mesure, sous-exploités alors même qu'ils constituent une ressource potentiellement valorisable.

Dans ce contexte, il apparaît nécessaire de développer de nouveaux matériaux permettant à la fois de réduire la dépendance aux ressources fossiles et de favoriser une logique d'économie circulaire. De tels matériaux doivent en outre permettre l'obtention de produits présentant des propriétés mécaniques satisfaisantes, compatibles avec les exigences des applications visées.

Diverses approches ont déjà été proposées pour élaborer, notamment par extrusion, des matériaux alternatifs à partir de polymères biosourcés ou de matières végétales, en vue de fabriquer des articles tels que des films, des papiers ou encore des pièces mises en forme par thermoformage ou par injection.

À titre d'exemple, le document FR 3 094 979 décrit des granulés plastiques au moins partiellement biosourcés et au moins partiellement biodégradables, ainsi que leur procédé de préparation par extrusion, ces granulés étant destinés à la fabrication d'objets plastiques finis tels que des films, des emballages ou des pièces obtenues par thermoformage ou moulage par injection. Plus particulièrement, ce document vise à fournir un bioplastique dans lequel le biopolymère est partiellement remplacé par une charge minérale principale, présente à plus de 50 % en poids par rapport à la masse totale des granulés, ladite charge consistant en du carbonate de calcium traité en surface. Ce document mentionne par ailleurs, de manière optionnelle, certaines charges organiques telles que l'écorce de fruit, les céréales ou le lin.

Le document TW I 869 176 s'inscrit quant à lui dans une démarche de réduction de l'usage de plastiques conventionnels, notamment pour les films de paillage, traditionnellement fabriqués à partir de polymères pétro-sourcés. Ce document expose que, malgré leurs avantages en termes de biodégradabilité et de recyclabilité, les films agricoles principalement réalisés à partir d'acide polylactique (PLA) n'ont pas encore connu d'adoption large, notamment en raison du coût élevé du PLA et de propriétés jugées insuffisantes pour certaines applications. Plus particulièrement, ce document décrit une composition biodégradable comprenant du polybutylène adipate téréphtalate (PBAT), de la poudre de fibres végétales issues de bambou et/ou de manioc, des agents de dégradation et des additifs biodégradables, parmi lesquels peuvent figurer des polymères biosourcés et d'origine bactérienne tels que les polyhydroxyalcanoates (PHA) ou le PLA, ainsi qu'un procédé d'extrusion permettant de préparer cette composition. L'objectif poursuivi est de fournir un matériau transformable, notamment destiné à des applications agricoles de type film ou feuille de paillage, apte à se dégrader directement dans le sol après usage.

Toutefois, il subsiste un besoin de proposer des matériaux alternatifs pour la préparation d'articles au moins partiellement biosourcés, permettant de valoriser des résidus issus de la transformation de déchets organiques végétaux, tout en restant compatibles avec des procédés industriels de mise en forme.

Il existe plus particulièrement un besoin de valoriser de tels résidus non pas seulement comme additifs accessoires ou charges secondaires, mais comme constituants effectifs de l'extrudât, contribuant de manière tangible à sa composition et à ses propriétés.

Les inventeurs ont ainsi mis en évidence que l'incorporation de résidus issus de la transformation de déchets organiques végétaux provenant de fruits, de légumes et/ou de céréales, en une quantité représentant au moins 5% en poids du produit final, permet de réduire significativement la quantité de polymère pétro-sourcé utilisée, voire de s'en affranchir totalement, tout en obtenant des articles présentant des propriétés satisfaisantes, voire améliorées, par rapport à des articles élaborés exclusivement à partir de polymères pétro-sourcés.

### RESUME DE L'INVENTION

Un premier objet de la présente invention vise à fournir un procédé de préparation d'un extrudât, comprenant les étapes suivantes :
a) introduction d'au moins un polymère choisi parmi les polymères pétro-sourcés recyclés, biosourcés et/ou d'origine bactérienne, dans un corps de mélange muni d'une bi-vis, par une zone d'alimentation principale, ledit polymère étant entrainé dans le corps de mélange au travers de la bi-vis ;
b) incorporation progressive, en aval de la zone d'alimentation principale, de résidus issus de la transformation de déchets organiques végétaux provenant de fruits, de légumes et/ou de céréales, au moyen d'au moins deux zones d'alimentation auxiliaires, lesdits résidus étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus,
c) chauffage dudit mélange obtenu à l'étape b) jusqu'à obtention d'un mélange pâteux ; et
d) extrusion dudit mélange pâteux obtenu à l'étape c) au travers d'une filière pour former un extrudât,
ledit extrudât comprenant au moins 5 % en poids desdits résidus, par rapport au poids total dudit extrudât.

Il a particulièrement été mis en évidence qu'un tel procédé est particulièrement utile dans la préparation d'extrudât pouvant par exemple être utilisé dans la fabrication de biomatériaux présentant d'excellentes performances mécaniques tout en étant économique et écologique.

Un deuxième objet de l'invention vise a également à fournir un extrudât obtenu ou susceptible d'être obtenu par le procédé selon la présente invention.

Un troisième objet de l'invention concerne l'utilisation dudit extrudât obtenu par le procédé selon la présente invention, dans un procédé de transformation, tel que le moulage par injection, le rotomoulage, le thermoformage, l'extrusion ou le calandrage.

Un quatrième objet de l'invention concerne un objet comprenant, en totalité ou partiellement, un extrudât obtenu par le procédé selon la présente invention.

### DESCRIPTION DETAILLEE

La présente invention concerne un procédé de préparation d'un extrudât, comprenant les étapes suivantes :
a) introduction d'au moins un polymère choisi parmi les polymères pétro-sourcés recyclés, biosourcés et/ou d'origine bactérienne, dans un corps de mélange muni d'une bi-vis, par une zone d'alimentation principale, ledit polymère étant entrainé dans le corps de mélange au travers de la bi-vis ;
b) incorporation progressive, en aval de la zone d'alimentation principale, de résidus issus de la transformation de déchets organiques végétaux provenant de fruits, de légumes et/ou de céréales, au moyen d'au moins deux zones d'alimentation auxiliaires, lesdits résidus étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus,
c) chauffage dudit mélange obtenu à l'étape b) jusqu'à obtention d'un mélange pâteux ; et
d) extrusion dudit mélange pâteux obtenu à l'étape c) au travers d'une filière pour former un extrudât,
ledit extrudât comprenant au moins 5 % en poids desdits résidus, par rapport au poids total dudit extrudât.

Par « extrudât », on entend au sens de la présente invention, tout matériau issu d'une opération d'extrusion, directement à la sortie de l'extrudeuse ou après traitement subséquent, tel qu'un refroidissement, une coupe ou une mise en forme, et se présentant notamment sous forme continue ou sous forme divisée, par exemple sous forme de granulés, pellets, joncs, rubans, plaques ou profilés.

Le procédé selon l'invention est réalisé au moyen d'une extrudeuse, notamment une extrudeuse bi-vis qui comprend un corps de mélange contenant une double vis co-rotative ou contrarotative.

Comme indiqué ci-dessus, l'étape a) comprend l'introduction d'au moins un polymère choisi parmi les polymères pétro-sourcés recyclés, biosourcés et/ou d'origine bactérienne, dans un corps de mélange muni d'une bi-vis, par une zone d'alimentation principale, ledit polymère étant entrainé dans le corps de mélange au travers de la bi-vis.

Par « corps de mélange », on entend un cylindre creux constituant le corps principal de l'extrudeuse, dans lequel s'effectuent l'acheminement, le chauffage, le cisaillement et le mélange des matériaux. Le corps de mélange comprend en son sein un système de vis de transport, plus particulièrement une double-vis (également nommée bi-vis)

Par « bi-vis », on entend un dispositif composé de deux vis co-rotatives ou contra-rotatives logées à l'intérieur du corps de mélange, qui assurent l'avancement des matériaux, leur homogénéisation par cisaillement, et leur transport jusqu'à la filière. La bi-vis permet un malaxage plus efficace que les vis simples, en particulier pour les mélanges complexes ou chargés.

Par « zone d'alimentation principale », on entend une trémie ou une ouverture positionnée en amont du corps de mélange, par laquelle est introduit le polymère. Cette zone est généralement située dans la première portion du corps de mélange, et peut être régulée en température pour initier le début de la fusion du polymère.

Par le terme « entraîné dans le corps de mélange au travers de la bi-vis », on entend que le polymère, une fois introduit dans la zone d'alimentation principale, est pris en charge mécaniquement par les filets des vis et progresse longitudinalement dans le corps de mélange en direction de la filière afin d'initier l'extrusion.

Par « polymère », on entend toute matière polymérique thermoplastique, de nature pétro-sourcée recyclée, biosourcée et/ou d'origine bactérienne, susceptible d'être fondue, mélangée et extrudée.

Avantageusement, le polymère est choisi parmi un polymère pétro-sourcé recyclé, biosourcé et/ou d'origine bactérienne. De préférence, le polymère est choisi parmi les polymères biosourcés et/ou d'origine bactérienne.

Plus particulièrement, le polymère pétro-sourcé recyclé peut notamment être choisi parmi le polyéthylène (PE) : HDPE (acronyme anglais pour désigner High-Density Polyethylene soit polyéthylène haute densité en français), LDPE (acronyme anglais pour désigner Low-Density Polyethylene, polyéthylène basse densité en français, LLDPE (acronyme anglais pour désigner Linear Low-Density Polyethylene, polyéthylène basse densité linéaire en français), le polypropylène (PP), le polyéthylène téréphtalate (PET), le polycarbonate (PC), l'acrylonitrile-butadiène-styrène (ABS), ou leurs mélanges.

Le polymère biosourcé peut notamment être choisi parmi l'acide polylactique (PLA), les amidons thermoplastiques (TPS), les copolymères PLA-PHB (polyhydroxybutyrate), le bio-polyéthylène (Bio-PE), le bio-polypropylène (bio-PP), ou leurs mélanges.

Le polymère d'origine bactérienne peut notamment être choisi parmi les polyhydroxyalcanoates (PHA), dont le polyhydroxybutyrate (PHB), le polyhydroxybutyrate-co-valerate (PHBV), le polyhydroxybutyrate-co-hexanoate (PHBH), ou leurs mélanges.

Avantageusement, le polymère est recyclé.

Selon un mode de réalisation préféré, l'étape a) du procédé est mise en œuvre en l'absence de polymère pétro-sourcé.

Le polymère est introduit sous forme de granulés, pellets ou poudre, typiquement d'une dimension comprise entre 1 mm et 5 mm, de préférence d'une dimension comprise entre 2 mm et 4 mm.

On notera que dans le cadre de la présente demande, et sauf stipulation contraire, les gammes de valeurs indiquées s'entendent bornes incluses.

Avantageusement, une étape de pré-traitement du polymère est réalisée. Cette étape consiste notamment à sécher le polymère pour obtenir un taux d'humidité inférieur à 10% avant l'étape a) le pourcentage étant exprimé par rapport au poids total du polymère après séchage.

Les méthodes de détermination du taux d'humidité sont bien connues de l'homme du métier. De préférence, le taux d'humidité mentionné dans la présente invention est déterminé par méthode gravimétrique, conformément à la norme ISO 15512.

Dans toute la demande, lorsqu'aucune date n'est précisée pour un règlement, une norme ou une directive, il s'agit du règlement, de la norme ou de la directive en vigueur à la date de dépôt.

Une fois le polymère introduit dans la zone d'alimentation principale conformément à l'étape a), une étape b) est réalisée afin d'incorporer progressivement, en aval de la zone d'alimentation principale, des résidus issus de la transformation de déchets organiques végétaux provenant de fruits, de légumes et/ou de céréales , au moyen d'au moins deux zones d'alimentation auxiliaires, lesdits résidus étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus, lesdits résidus étant incorporés en une quantité telle que l'extrudât final comprend au moins 5% en poids desdits résidus, par rapport au poids total dudit extrudât final.

Selon la présente invention, les résidus sont obtenus après traitement thermique et mécanique de déchets organiques. Ces résidus sont principalement issus de déchets de matières organiques végétales (tiges, feuilles, écorces, pulpe, cosse, marc, etc.).

Dans la présente demande, les expressions « résidus issus de la transformation de déchets organiques », « résidus issus de la transformation de déchets organiques végétaux », « résidus issus de déchets organiques », « résidus issus de déchets organiques végétaux » et le terme « résidus » sont utilisés de manière équivalente et interchangeable.

De préférence, les déchets organiques végétaux peuvent provenir de déchets issus de l'industrie agroalimentaire, tels que les drêches de céréales issues du brassage de la bière, ou encore la pulpe ou le marc de fruits et/ou de légumes.

Avantageusement, la drêche de céréales utilisée est issue du brassage de la bière, constituée majoritairement de résidus de céréales tels que l'orge, l'orge maltée, le blé ou d'autres grains brassicoles, et correspond à un coproduit de l'industrie brassicole obtenu après extraction du moût.

A titre d'exemple, les résidus issus de la transformation de déchets organiques peuvent également être choisis parmi le marc de pomme, le marc de café, le lin, la canne à sucre, les cosses de soja, de sarrasin, de maïs, de petit-pois et tout type de végétaux fibreux. De manière préférée, les résidus sont de la drêche de céréales, le marc de pomme et/ou le marc de café.

Les résidus selon l'invention sont des résidus fibreux.

Par « résidus fibreux », on entend des résidus composés majoritairement de fibres végétales (cellulose, hémicellulose et lignine) qui se caractérisent par une structure fibreuse, c'est-à-dire formée d'éléments allongés de type filamenteux ou fibrillaire, présentant un rapport longueur/diamètre élevé.

Avantageusement, les résidus comprennent au moins 10%, de préférence entre 10% et 90%, encore plus préférentiellement entre 15% et 70% en poids de fibres, les pourcentages étant indiqués sur le poids sec des résidus.

Les méthodes de détermination de la teneur en fibres sont bien connues de l'homme du métier. A titre d'exemple et de manière préférée, la détermination de cette teneur sera effectuée selon la méthode AOAC 985.29.

Les résidus peuvent être incorporés sous forme de granulés, de poudre ou de pellets, de dimension inférieure ou égale à 3 mm, de préférence de dimension comprise entre 0,1 mm et 2 mm, encore plus préférentiellement entre 0,2 mm et 1,5 mm.

Avantageusement, les résidus sont soumis à une étape de pré-traitement avant l'étape b) comprenant une étape de séchage à une température inférieure à 200°C, pendant un temps adapté, afin de réduire leur teneur en humidité à moins de 10%, le pourcentage étant exprimé par rapport au poids total des résidus après séchage et/ou une étape de broyage permettant d'obtenir une poudre dont la dimension est inférieure ou égale à 3 mm.

Par « zones d'alimentation auxiliaires », on entend des zones d'introduction complémentaires, situées en aval de la zone d'alimentation principale, permettant l'incorporation différée et progressive des résidus organiques. Ces zones peuvent être situées à différents points le long du corps de mélange.

Avantageusement, l'incorporation progressive des résidus est réalisée au moyen d'au moins deux zones d'alimentation auxiliaires, et de manière préférentielle, au moyen de trois zones d'alimentation auxiliaires distinctes. Le nombre de ces zones peut être ajusté en fonction de la quantité de résidus organiques à introduire dans l'extrudeuse.

Plus cette quantité est élevée, par exemple lorsque plus de 30% en poids de résidus est incorporé, plus il est avantageux de répartir l'introduction des résidus sur plusieurs zones d'alimentation auxiliaires, afin de garantir une incorporation progressive et d'assurer un mélange homogène du polymère et des résidus avant l'étape d'extrusion.

Par « incorporation progressive », on entend que les résidus sont ajoutés en plusieurs fractions, successivement dans les différentes zones auxiliaires, de façon à éviter les surcharges locales, les agrégats et favoriser une dispersion homogène dans la matrice polymère.

Par « mélange homogène », on entend un mélange dans lequel les résidus sont répartis de façon uniforme au sein du polymère fondu, sans agrégation apparente ni phase continue distincte.

L'obtention d'un mélange homogène avant le passage en filière constitue une étape importante du procédé selon l'invention. En effet, l'incorporation progressive des résidus issus de déchets organiques dans le polymère, réalisée en plusieurs points le long du corps de mélange, permet d'assurer une dispersion fine et uniforme de ces résidus dans la matrice polymère fondue. Cette homogénéisation est favorisée par l'action de la bi-vis, qui assure à la fois le transport, le cisaillement et le mélange intensif du matériau.

Cette homogénéité du mélange, obtenue avant extrusion à travers la filière, est essentielle car elle conditionne directement la qualité des objets finis fabriqués par injection, thermoformage ou roto-moulage à partir de cet extrudât, en assurant une répartition régulière des charges organiques à l'échelle microscopique. Elle permet notamment d'éviter des défauts d'aspect (tels que points noirs, marbrures ou zones de surconcentration de résidus) et des variations locales des propriétés mécaniques dans les produits finaux.

Il en résulte un extrudât de qualité constante, apte à la fabrication d'objets esthétiques, aux surfaces lisses, sans défauts visibles, et présentant une bonne tenue mécanique (rigidité, résistance à la traction, à l'impact, etc.), même à forte teneur (plus de 30% en poids) en résidus issus de déchets organiques. Cette maîtrise du mélange permet donc de répondre à des exigences industrielles élevées tout en conservant les avantages environnementaux liés à l'utilisation de composants issus de ressources renouvelables ou de coproduits organiques.

Une fois l'étape b) réalisée, le mélange (d'au moins un polymère et de résidus issus de déchets organiques) est chauffé jusqu'à l'obtention d'un mélange pâteux (étape c)).

Par « mélange pâteux », on entend un mélange présentant une consistance intermédiaire entre l'état liquide et l'état solide, se caractérisant par une viscosité élevée, une déformabilité sous contrainte, et une cohésion suffisante pour maintenir une forme sans écoulement spontané.

Dans le cadre de la présente invention, le mélange pâteux résulte du chauffage progressif d'au moins un polymère et de résidus issus de déchets organiques, jusqu'à obtention d'un état homogène et malléable, apte à être extrudé au travers d'une filière. Plus particulièrement, ce mélange, bien que non fluide au repos, est capable de s'écouler sous l'effet de la contrainte mécanique exercée par la bi-vis et de traverser une filière afin de former un extrudât continu. Il présente une viscosité adaptée au passage en filière, sans rupture de flux ni séparation de phases, garantissant une qualité optimale de l'extrudât obtenu.

Une fois l'état pâteux du mélange obtenu à l'issue de l'étape c), une étape d) est mise en œuvre, consistant en l'extrusion dudit mélange pâteux au travers d'une filière pour former un extrudât. A ce stade, un extrudât continu est obtenu.

Avantageusement, le procédé selon la présente invention comprend entre l'introduction du polymère à l'étape a) et l'extrusion à l'étape d), une montée progressive en température qui est appliquée le long du corps de mélange, de manière à chauffer progressivement le mélange, la température augmentant d'une valeur T₁, comprise entre 20°C et 60°C, jusqu'à une valeur T₂, comprise entre 160°C et 250°C.

Plus particulièrement, au cours du procédé, cette montée progressive en température est appliquée le long du corps de mélange, généralement au moyen de zones de chauffe contrôlées, de manière à assurer la fusion du polymère et la dispersion homogène des résidus dans la matrice fondue. La température de traitement est ajustée en fonction de la nature du polymère, et est généralement comprise entre 120°C et 250°C. L'ajustement de la température à appliquer au cours du procédé selon l'invention relève des connaissances générales de l'homme du métier.

Au cours de l'étape d), le mélange pâteux est poussé, par exemple, à travers une filière qui peut être sous forme de plaque perforée ou d'orifice calibré, située à l'extrémité du corps de mélange, afin de former un brin ou un profil continu.

La filière permet de conférer au matériau extrudé une forme prédéfinie (telle qu'un jonc ou un brin).

L'extrudât obtenu est le matériau obtenu en sortie de filière, sous forme continue (brin, jonc, filament, profil) ou découpée (granulés, pellets), pouvant être utilisé tel quel ou soumis à des étapes ultérieures telles que le refroidissement, le séchage, la granulation ou la transformation (injection, roto-moulage, thermoformage, etc.).

Avantageusement, l'extrudât obtenu à l'étape d) comprend entre 5% et 70% en poids, de préférence entre 10% et 50% en poids, encore plus préférentiellement entre 10% et 30% en poids de résidus, les pourcentages étant indiqués sur le poids total dudit extrudât.

Avantageusement, les résidus sont des résidus fibreux (au moins 10% en poids de fibres, le pourcentage étant indiqué sur le poids sec des résidus) dont l'incorporation présente un avantage particulier en ce qu'elle permet d'obtenir un mélange homogène avec le polymère dans lequel les fibres sont dispersées de manière homogène et entremêlées à la matrice polymère au cours de la phase de mélange (étapes a) et b)). Cette homogénéité structurelle favorise la cohésion du matériau et permet ainsi la fabrication d'objets robustes, présentant une bonne tenue mécanique et une résistance adaptée aux usages visés.

Avantageusement, l'extrudât obtenu à l'étape d) comprend entre 30% et 99% en poids, de préférence entre 30% et 80% en poids, encore plus préférentiellement entre 40% et 70% en poids de polymère, les pourcentages étant indiqués sur le poids total de l'extrudât.

Avantageusement, l'extrudât obtenu à l'étape d) peut en outre comprendre au moins un additif choisi parmi un agent de renfort, un plastifiant, un colorant et/ou un additif fonctionnel, sélectionné(s) en fonction des propriétés recherchées pour l'objet final. Parmi les additifs possibles figurent notamment : des fibres végétales, des charges minérales (talc, carbonate de calcium), des plastifiants biosourcés (glycérol, sorbitol), des agents de couplage, ou encore des colorants naturels et des agents antifongiques.

Avantageusement, l'extrudât obtenu à l'étape d) comprend entre 0,1% et 20%, de préférence entre 0,5% et 15%, plus préférentiellement entre 1% et 10% en poids d'additifs, les pourcentages étant indiqués sur le poids total de l'extrudât.

Les quantités des différents composés constituant l'extrudât obtenu à l'étape d) correspondent aux quantités introduites dans la zone d'alimentation principale et dans les zones d'alimentation auxiliaires, respectivement au cours des étapes a) et b).

Avantageusement, l'extrudât est biosourcé, de préférence l'extrudât est biosourcé à 100%, c'est-à-dire qu'il comprend au moins un polymère biosourcé et/ou d'origine bactérienne et des résidus issus de déchets organiques. La présente invention permet ainsi de proposer une alternative durable, recyclable et biodégradable aux matériaux traditionnels issus de ressources non renouvelables (bois, plastiques, agglomérés), tout en valorisant des déchets organiques dans une logique d'économie circulaire.

Avantageusement, le procédé selon l'invention comprend en outre une étape e), correspondant à une extrusion-granulation, dans laquelle l'extrudât obtenu à l'étape d) est refroidi dans un réservoir de refroidissement comprenant de l'eau, puis est découpé par un couteau granulateur afin d'obtenir un extrudât sous forme de granulés, de poudre ou de pellets.

Selon une forme de réalisation, le refroidissement et la découpe peuvent être réalisés de manière successive, l'extrudât étant tout d'abord refroidi dans un réservoir de refroidissement contenant de l'eau, puis tiré sous forme de brins (ou joncs), séché, et enfin coupé à l'aide d'un dispositif à lames rotatives, correspondant à une granulation à sec.

Selon une autre forme de réalisation, le refroidissement et la découpe sont réalisés simultanément, par exemple, au sein d'un module fermé à eau pressurisée, de type granulation sous eau, dans lequel l'extrudât fondu est extrudé directement au travers de la filière et immédiatement découpé sous l'eau par un couteau rotatif, au ras de la plaque de sortie.

Le choix du système de granulation dépend notamment de la viscosité du mélange fondu, du débit d'extrusion, ainsi que de la forme et de la taille souhaitées pour les particules finales.

Avantageusement, après l'étape e), une étape de séchage est mise en œuvre sur les granulés, poudre ou pellets obtenus, à une température appropriée, pour obtenir un taux d'humidité inférieur à 10% en poids, de préférence entre 1% et 8% en poids, encore plus préférentiellement entre 2% et 5% en poids, les pourcentages étant exprimés par rapport au poids total des granulés, de la poudre ou des pellets séchés.

Un autre objet de la présente invention concerne un extrudât obtenu par le procédé selon l'invention tel que décrit ci-dessus.

Un autre objet de la présente invention concerne l'utilisation de l'extrudât obtenu par le procédé selon la présente invention, dans un procédé de transformation, tel que le moulage par injection, le roto-moulage, le thermoformage, l'extrusion ou le calandrage. L'extrudât selon l'invention présente une bonne aptitude à la mise en forme notamment grâce à un mélange très homogène entre le polymère et les résidus issus de déchets organiques, préalablement à l'extrusion, ce qui permet sa transformation en une grande variété de produits finis aux propriétés mécaniques comparables aux produits issus de matériaux traditionnels (bois, plastique...), quels que soient leur forme ou leur usage.

Avantageusement, avant l'étape de transformation, notamment lorsque l'extrudât est sous forme de granulés (communément nommé compound), il est soumis à une étape préalable de broyage afin d'obtenir une poudre constituée de particules dont la dimension est comprise entre 0,1 mm et 3 mm. Cette étape de réduction granulométrique peut être nécessaire afin d'assurer un bon écoulement de l'extrudât (sous forme de poudre) au cours du procédé de transformation.

Toutes ces techniques de transformation sont connues de l'homme du métier. L'ajustement des conditions nécessaires aux procédés de transformations, tels que moulage par injection, le rotomoulage, le thermoformage, l'extrusion ou le calandrage, relève des connaissances générales de l'homme du métier qui est capable de sélectionner les conditions adaptées en fonction des propriétés physico-chimiques des matériaux de départ utilisés (notamment polymère et résidus issus de déchets organiques).

Un autre objet de la présente invention concerne un objet comprenant, en totalité ou partiellement, un extrudât obtenu ou susceptible d'être obtenu par le procédé selon la présente invention. Cet objet peut être, par exemple, un article moulé, thermoformé, extrudé ou calandré.

A titre d'exemple non limitatif, l'objet obtenu à partir de l'extrudât selon la présente invention peut être un tabouret, un couvercle, notamment de boîte à outils, un gobelet, une capsule monodose destinée à la préparation de boissons, notamment une capsule rigide thermoformée pour extraction sous pression, de type insérable dans une machine à café domestique, un pot de fleur.

Ainsi, l'extrudât obtenu ou susceptible d'être obtenu selon le procédé de l'invention ou l'extrudât selon l'invention permet de fabriquer tout type d'objet, tout en assurant les propriétés mécaniques adaptées à l'usage visé, telles que la rigidité, la flexibilité ou la résistance aux chocs, en fonction de la forme, de l'épaisseur et de l'usage de l'objet.

L'extrudât peut notamment être transformé par moulage par injection, par extrusion, thermoformage, roto-moulage ou calandrage, pour la production d'articles variés, présentant des performances mécaniques satisfaisantes, tout en intégrant des composants biosourcés ou issus de la valorisation de déchets organiques.

### BRÈVE DESCRIPTION DE LA FIGURE

D'autres caractéristiques et avantages de l'invention apparaîtront dans les exemples qui suivent, donnés à titre illustratif, avec référence à :

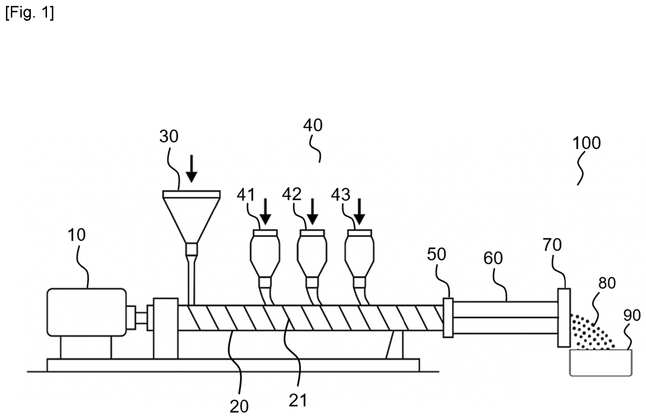

La Figure 1 représente schématiquement un dispositif d'extrusion-granulation bi-vis (100) permettant la mise en œuvre du procédé de préparation d'un extrudât selon l'invention. Le dispositif comprend un moteur (10) qui entraîne un corps de mélange (20), lequel renferme un ensemble bi-vis (21) assurant l'acheminement et le cisaillement des matériaux introduits. À l'amont du corps de mélange (20), une zone d'alimentation principale (30) est prévue pour l'introduction (le chargement) d'au moins un polymère ; le polymère ainsi introduit est immédiatement pris en charge par la bi-vis (21) et progresse le long du corps de mélange (20).

En aval de la zone (30), une zone d'alimentations auxiliaires (40) comprend successivement, par exemple, trois trémies (41, 42, 43) permettant d'incorporer progressivement des résidus issus de déchets organiques (notamment issus de fruits, de légumes et/ou de céréales) dans le polymère préchauffé. Les résidus sont intimement mélangés au sein du corps de mélange (20) sous l'action de la géométrie coopérante de la bi-vis (21). Un chauffage progressif est réalisé le long du corps de mélange (20) afin d'obtenir un mélange (polymère et résidus) pâteux.

À l'extrémité aval du corps de mélange, une filière (50) reçoit le mélange pâteux ; la pression développée par la bi-vis (21) force l'écoulement du mélange à travers les orifices calibrés de la filière (50), formant ainsi des brins continus d'extrudât. Ces brins sont immédiatement immergés dans un réservoir de refroidissement (60) rempli d'eau, où le contact thermique réduit rapidement la température (jusqu'à atteindre une température proche de 25°C) et solidifie le matériau extrudé.

À la sortie du réservoir (60), un couteau granulateur (70) sectionne les brins refroidis pour obtenir des particules régulières, telles que des granulés, de la poudre ou des pellets (80). Enfin, un bac de stockage (90) collecte les extrudâts (ou compound) obtenus (80) pour le conditionnement ou le transport ultérieur. Ainsi, la figure illustre l'enchaînement fonctionnel depuis l'alimentation des composants jusqu'à la récupération du produit granulé final.

### EXEMPLES

Les matières premières utilisées dans les exemples sont listées ci-après :
- Polyéthylène recyclé (PE25)
- Polymère végétal (VM25)
- Résidus issus de déchets organiques : résidus végétaux à base de céréales (drêche, résidus issus du brassage de la bière), marc de pomme et marc de café

### Exemple 1 : Procédé de préparation d'extrudâts selon la présente invention

### Exemple 1.1 Exemple de préparation d'un extrudât à partir de polyéthylène recyclé et de drêche de céréales

Cet exemple illustre la préparation d'un extrudât selon l'invention, comprenant entre 10% et 30% en poids de résidus de céréales (drêche), incorporés de manière progressive dans un polymère, plus particulièrement du polyéthylène recyclé.

### Étape 1 : Prétraitement de la drêche de céréales

Séchage : La drêche est d'abord séchée à une température inférieure à 200°C, pendant un temps adapté, afin de réduire sa teneur en humidité à moins de 10%.

Broyage : La drêche est ensuite broyée pour obtenir une poudre, nommée poudre de résidus, d'une dimension inférieure ou égale à 3mm.

La drêche de céréales ainsi préparée est donc déshydratée tout en conservant les propriétés intrinsèques du produit (notamment la teneur en fibres).

### Étape 2 : Prétraitement du polyéthylène recyclé

Le polyéthylène recyclé, sous forme de granulés, de taille moyenne comprise entre 1 mm et 5 mm, est préalablement séché pour éliminer toute humidité résiduelle.

### Étape 3 : Alimentation et mise en œuvre dans l'extrudeuse bi-vis

Pour la préparation de l'extrudât selon l'exemple 1.1 une extrudeuse bi-vis a été utilisée.

Les granulés de polyéthylène recyclé sont introduits dans un corps de mélange (20) muni d'une bi-vis (21), par une zone d'alimentation principale (30), lesdits granulés de polyéthylène recyclé sont entrainés dans le corps de mélange (20) de l'extrudeuse au travers de la bi-vis (21). Cette zone d'alimentation principale (30) est à une température relativement basse comprise entre 20°C et 60°C.

Le dispositif bi-vis (21) correspond à un mélangeur interne (vis sans fin) afin d'assurer une dispersion uniforme de la poudre de résidus (drêche de céréales) dans le polyéthylène recyclé.

La vitesse de rotation des vis est réglée, à des vitesses comprises entre 10 tours/minute et 400 tours/minute.

La poudre de résidus est ensuite ajoutée de manière progressive au polyéthylène dans des zones d'alimentation auxiliaires (41, 42, 43), qui sont des zones d'alimentation distinctes, disposées en aval de la zone d'alimentation principale (30). L'incorporation progressive par les zones d'alimentation auxiliaires (41, 42, 43) de la poudre de résidus dans le polyéthylène recyclé est nécessaire pour garantir une dispersion homogène du polymère et de la poudre de résidus.

Tout le long du corps de mélange (20), c'est-à-dire de la zone d'alimentation principale (30) jusqu'à la filière (50), la température augmente progressivement jusqu'à atteindre la température de fusion du polyéthylène qui est comprise entre 120°C et 200°C, afin d'obtenir un mélange pâteux. La température maximale atteinte ne doit pas être trop élevée pour ne pas dégrader les propriétés du polymère.

Le taux d'incorporation est contrôlé pour atteindre entre 10% et 30% en poids de poudre de résidus par rapport au poids total de l'extrudât.

### Étape 4 : Mise en forme

Le mélange homogène est conduit vers une filière (50), qui lui donne la forme d'un jonc.

Le jonc, immédiatement après son extrusion, est refroidi rapidement dans un réservoir de refroidissement (60) comprenant de l'eau froide jusqu'à atteindre une température voisine de la température ambiante, typiquement de l'ordre de 25°C.

Une fois solidifié, le jonc est découpé en morceaux par un couteau granulateur (70) pour obtenir un extrudât sous forme de granulés de dimension comprise entre 0,1 mm et 4 mm. L'extrudât obtenu sous forme de granulés est également désigné par le terme « compound ».

L'extrudât obtenu présente une bonne homogénéité visuelle, une forme régulière, et est apte à être transformé.

### Exemple 1.2 Variantes de matières premières

D'autres extrudâts ont été obtenus selon le procédé décrit à l'exemple 1.1 ci-dessus, en utilisant des matériaux de départ différents, notamment en ce qui concerne le type de polymère et le type de résidus issus de déchets organiques végétaux incorporé.

Le procédé de préparation de l'extrudât a été reproduit à l'identique, à l'exception des matières premières utilisées. Plus particulièrement :
- Dans une première variante, le polymère utilisé était un polymère végétal biosourcé, introduit dans l'extrudeuse selon les mêmes modalités que dans l'exemple 1.1, et de la drêche de céréales (Composé 1.2.1).
- Dans une seconde variante, le polymère utilisé était du polyéthylène recyclé, et du marc de pomme préalablement séché et broyé (Composé 1.2.2).
- Dans une troisième variante, le polymère utilisé était également du polyéthylène recyclé, et du marc de café, également séché et broyé (Composé 1.2.3).

Dans l'ensemble de ces variantes (Composés 1.2.1 à 1.2.3), les taux d'incorporation en résidus organiques étaient également compris entre 10 % et 30 % en poids, le pourcentage étant indiqué sur le poids de l'extrudât, et la température de fusion finale était comprise entre 120 °C et 200 °C. L'extrudât obtenu dans chaque cas présentait une bonne homogénéité visuelle, une forme régulière, et une aptitude à la transformation.

### Exemple 2 : Fabrication d'articles à partir des extrudâts obtenus aux exemples 1.1 et 1.2

Des exemples ont été réalisés pour démontrer que les extrudâts selon l'invention peuvent être utilisés comme matériaux de départ dans la fabrication d'objets présentant des propriétés mécaniques et esthétiques comparables voire supérieures à celles obtenues avec des matériaux exclusivement dérivés de polymères pétro-sourcés. Plus spécifiquement, des tests de roto-moulage ont été menés pour produire des couvercles de boîtes à outils ainsi qu'un tabouret. Cet exemple met en évidence les résultats obtenus avec les extrudâts décrits dans les exemples 1.1 et 1.2 (Composé 1.2.1).

### Exemple 2.1 : Fabrication d'un couvercle de boîte à outils et d'un tabouret à partir de l'extrudât obtenu à l'exemple 1.1

Dans cet exemple, l'extrudât de départ est celui obtenu à l'exemple 1.1 tel que décrit ci-dessus. Cet extrudât, sous forme de granulés (compound), a été soumis à une étape de broyage afin d'obtenir une poudre constituée de particules dont la dimension est comprise entre 0,1 mm et 3 mm. Cette étape de réduction granulométrique peut être nécessaire afin d'assurer un bon écoulement de l'extrudât (sous forme de poudre) dans le moule.

Un couvercle de boîte à outils et un tabouret ont été fabriqués à partir de cet extrudât en poudre, par un procédé de roto-moulage.

Deux moules, présentant une forme de couvercle de boîte à outils et de tabouret, ont été remplis avec l'extrudât en poudre obtenue après broyage, puis introduits dans un four afin de permettre la fusion de l'extrudât en poudre.

Dans un procédé de roto-moulage, l'étape principale consiste à chauffer le moule en rotation pendant une durée déterminée, afin de permettre à l'extrudât broyé de fondre et d'adhérer progressivement aux parois internes du moule. Puis un temps de maintien à température est assuré afin de permettre une fusion homogène, une bonne répartition de la matière et la formation d'un objet aux parois régulières et sans défauts.

Les différentes conditions testées sont présentées dans le Tableau 1 ci-dessous :

### [Table 1]

**Tableau 1 : conditions mises en œuvre pour l'exemple 2.1**

| **Objet** | **Température du four** | **Temps de maintien à température** | **Temps de refroidissement** |
|---|---|---|---|
| Couvercle de boîte à outils | Entre 200°C et 280°C | Entre 15 et 25 minutes | Moins de 15 minutes |
| Tabouret | Entre 200°C et 280°C | Entre 20 et 30 minutes | Moins de 30 minutes |

A l'issu de cet exemple, les couvercles et le tabouret présentent une bonne solidité et souplesse comparables à des objets identiques obtenus seulement à partir de polymères pétro-sourcés (validé par des essais de compression).

### Exemple 2.2 : Fabrication d'un couvercle de boîte à outils à partir du composé 1.2.1 obtenu à l'exemple 1.2

Dans cet exemple, l'extrudât de départ est le composé 1.2.1 celui obtenu à l'exemple 1.2 tel que décrit ci-dessus. Cet extrudât sous forme de granulés a été soumis à une étape de broyage afin d'obtenir une poudre constituée de particules dont la dimension est comprise entre 0,1 mm et 3 mm. Comme pour l'exemple 2.1, cette étape de réduction granulométrique peut être nécessaire afin d'assurer un bon écoulement de l'extrudât (sous forme de poudre) dans le moule.

Un couvercle de boîte à outils a été fabriqué à partir de cet extrudât par un procédé de roto-moulage (tel que décrit ci-avant).

Les conditions testées sont présentées dans le Tableau 2 ci-dessous :

### [Table 2]

**Tableau 2 : conditions mises en œuvre dans l'exemple 2.2**

| **Objet** | **Température du four** | **Temps de maintien à température** | **Temps de refroidissement** |
|---|---|---|---|
| Couvercle de boîte à outils | Entre 200°C et 280°C | Entre 15 et 25 minutes | Moins de 15 minutes |

Cet exemple démontre que l'utilisation d'un extrudât selon l'invention permet de fabriquer divers objets tel qu'un couvercle de boîte à outils, en ajustant les paramètres du procédé en fonction de l'extrudât utilisé. Cette approche répond non seulement aux exigences techniques en termes de résistance, de flexibilité et d'esthétique, mais contribue également à une économie circulaire en valorisant des résidus agroalimentaires.

### Exemple 3 : Fabrication de gobelets à partir d'extrudâts obtenus aux exemples 1.1 et 1.2

Cet exemple a été réalisé pour démontrer que les extrudâts selon l'invention peuvent être utilisés comme matériaux de départ dans la fabrication d'objets présentant des propriétés mécaniques et esthétiques comparables voire supérieures à celles obtenues avec des matériaux exclusivement dérivés de polymères pétro-sourcés. Plus spécifiquement, un procédé d'injection a été réalisé pour produire des gobelets. Cet exemple met en évidence les résultats obtenus avec les deux extrudâts décrits dans les exemples 1.1 et 1.2.

Dans cet exemple, l'extrudât de départ est celui obtenu aux exemples 1.1 et 1.2 (Composés 1.2.1 à 1.2.3), tels que décrit ci-dessus, sous forme de granulés (également désigné « compound »).

Les gobelets ont été fabriqués à partir de ces extrudâts par un procédé d'injection.

Un moule conformé en forme de gobelet a été rempli par injection de l'extrudât correspondant, à savoir celui obtenu selon l'exemple 1.1 ou les composés 1.2.1, 1.2.2 et 1.2.3, préalablement portés à l'état fondu par chauffage à une température supérieure à leur température de fusion.

Les différentes conditions testées sont présentées dans le Tableau 3 ci-dessous :

### [Table 3]

**Tableau 3 : conditions mises en œuvre pour l'exemple 3.1**

| **Objet** | **Température du moule (°C)** | **Température d'injection (°C)** | **Pression (Mpa*)** |
|---|---|---|---|
| Gobelet | Entre 180°C et 220°C | Entre 140°C et 200°C | Entre 80MPa et 200 MPa |

| | | | |
|---|---|---|---|
| **Unité : pascal.* | | | |

A l'issu de cet exemple, les gobelets obtenus à cet exemple présentent une bonne solidité et souplesse comparables à des objets identiques obtenus seulement à partir de polymères pétro-sourcés (validé par des essais de compression).

### Exemple 4 : Fabrication de pots de fleurs à partir d'un extrudât obtenus à l'exemple 1.2

Cet exemple est relatif à l'utilisation d'un extrudât obtenu selon le procédé de l'invention pour la fabrication de pots de fleurs.

Cet exemple met en évidence les propriétés mécaniques obtenus à partir de cet extrudât.

L'extrudât utilisé comme matériau de départ correspond au composé 1.2.1, tel que décrit à l'exemple 1.2, constitué d'un polymère végétal et de drêche, et présenté sous forme de granulés (également désignés comme compound).

Les pots de fleurs ont été fabriqués à partir de cet extrudât par un procédé de moulage par injection.

À cet effet, un moule conformé en forme de pot de fleur a été rempli par injection de l'extrudât (composé 1.2.1), préalablement porté à l'état fondu par chauffage à une température supérieure à sa température de fusion.

Un moule conformé en forme de pot de fleur a été rempli par injection de l'extrudât correspondant, à savoir le composé 1.2.1, préalablement porté à l'état fondu par chauffage à une température supérieure à leur température de fusion.

Les différentes conditions testées sont présentées dans le Tableau 4 ci-dessous :

### [Table 4]

**Tableau 4 : conditions mises en œuvre pour l'exemple 4**

| **Objet** | **Température du moule (°C)** | **Température d'injection (°C)** | **Pression (Mpa)** |
|---|---|---|---|
| Pot de fleurs | Entre 180°C et 220°C | Entre 140°C et 200°C | Entre 80MPa et 200 MPa |

À l'issue de l'essai, les pots de fleurs obtenus présentent une bonne solidité et une souplesse satisfaisante, comparables à celles d'objets analogues réalisés exclusivement à partir de polymères pétro-sourcés, ces performances ayant été confirmées par des essais de compression.

## Revendications

1. Procédé de préparation d'un extrudât, comprenant les étapes suivantes :
a) introduction d'au moins un polymère choisi parmi les polymères pétro-sourcés recyclés, biosourcés et/ou d'origine bactérienne, dans un corps de mélange (20) muni d'une bi-vis (21), par une zone d'alimentation principale (30), ledit polymère étant entrainé dans le corps de mélange (20) au travers de la bi-vis (21) ;
b) incorporation progressive, en aval de la zone d'alimentation principale (30), de résidus issus de la transformation de déchets organiques végétaux provenant de fruits, de légumes et/ou de céréales, au moyen d'au moins deux zones d'alimentation auxiliaires (41, 42, 43), lesdits résidus étant introduits en plusieurs fractions successives au moyen d'au moins deux zones d'alimentation auxiliaires distinctes, axialement espacées le long du corps de mélange, afin d'obtenir un mélange homogène d'au moins un polymère et desdits résidus,
c) chauffage dudit mélange obtenu à l'étape b) jusqu'à obtention d'un mélange pâteux ; et
d) extrusion dudit mélange pâteux obtenu à l'étape c) au travers d'une filière (50) pour former un extrudât,
ledit extrudât comprenant au moins 5% en poids desdits résidus, par rapport au poids total dudit extrudât.

2. Procédé selon la revendication 1, dans lequel le polymère est biosourcé et/ou d'origine bactérienne.

3. Procédé selon la revendication 1 ou 2, dans lequel, entre l'introduction du polymère à l'étape a) et l'extrusion à l'étape d), une montée progressive en température est appliquée le long du corps de mélange (20), de manière à chauffer progressivement le mélange, la température augmentant d'une valeur T₁, comprise entre 20 °C et 60 °C, jusqu'à une valeur T₂, comprise entre 160 °C et 250 °C.

4. Procédé selon l'une quelconque des revendications 1 à 3, dans lequel l'extrudât obtenu à l'étape d) comprend entre 5% et 70% en poids de résidus, les pourcentages étant indiqués sur le poids total de l'extrudât.

5. Procédé selon l'une quelconque des revendications 1 à 4, dans lequel les résidus sont choisis parmi la drêche de céréales, le marc de légumes et/ou de fruits, notamment de pomme, le marc de café et la pulpe de légumes et/ou de fruits, ou leurs mélanges.

6. Procédé selon la revendication l'une quelconque des revendications 1 à 5, dans lequel les résidus comprennent au moins 10% en poids de fibres, le pourcentage étant indiqué sur le poids sec des résidus.

7. Procédé selon l'une quelconque des revendications 1 à 6, dans lequel les résidus sont incorporés sous forme de poudre, de granulés ou de pellets, ayant une dimension inférieure ou égale à 3 mm.

8. Procédé selon l'une quelconque des revendications 1 à 7, comprenant en outre une étape e) dans laquelle l'extrudât obtenu à l'étape d) est refroidi dans un réservoir de refroidissement (60), puis est découpé par un couteau granulateur (70) afin d'obtenir un extrudât sous forme de granulés, de poudre ou de pellets (80).

9. Procédé selon la revendication 8, comprenant en outre une étape de séchage des granulés, poudre ou pellets (80) obtenus à l'étape e), à une température appropriée, pour obtenir un taux d'humidité inférieur à 10% en poids, le pourcentage étant exprimé par rapport au poids total des granulés, de la poudre ou des pellets (80) séchés.

10. Extrudât obtenu par le procédé selon l'une quelconque des revendications 1 à 9.

11. Utilisation de l'extrudât obtenu par le procédé selon l'une quelconque des revendications 1 à 9, dans un procédé de transformation, tel que le moulage par injection, le rotomoulage, le thermoformage, l'extrusion ou le calandrage.

12. Objet comprenant, en totalité ou partiellement, un extrudât obtenu par le procédé selon l'une quelconque des revendications 1 à 9.
